# EUROPEAN PATENT APPLICATION

(11) **EP 1 139 255 A2**
(43) Date of publication of application: **04.10.2001**
(21) Application number: 01108140.3
(22) Date of filing: 30.03.2001
(51) Int. Cl.: G06F 17/60

(54) **Auction system, method and apparatus**

(30) Priority: 30.03.2000 JP 2000093255
(71) Applicant: TOYOTA JIDOSHA KABUSHIKI KAISHA, Aichi-ken 471-8571 (JP)
(72) Inventor: Fujiwara, Yasuhisa, Toyota Jidosha Kabushiki K., Toyota-shi, Aichi-ken 471-8571 (JP); Matsueda, Nobuaki, Toyota Jidosha Kabushiki Kaisha, Toyota-shi, Aichi-ken 471-8571 (JP)
(74) Representative: Leson, Thomas Johannes Alois, Dipl.-Ing.

(57) **Abstract**

In client-server systems interconnected through a network (10), a server computer (12) accepts bids from respective client computers (14 to 20) while reducing the price of an article stepwise. If a plurality of bids have been made at a certain price, one of the bidders is determined as a winner at the price. The server computer (12) sends information on the confirmation of a knock-down to the winner. The auction is closed upon completion of the knock-down process. The auction is easily and reliably held by using the network.

## Description

### BACKGROUND OF THE INVENTION

### 1. Field of Invention

The invention relates to an auction method and an auction system and, more particularly, to an auction where the price of an article is reduced using a communication network.

### 2. Description of Related Art

In response to the development of computer and communication technologies in recent years, there is proposed a system for holding an auction of articles using a communication network.

For example, Japanese Patent Application Laid-Open No. HEI 10-78992 discloses an automatic auction method, where an auction order information is provided that designates an article's desired price, number of copies to be purchased, and highest allowable price at the time of competition is accepted through an on-line circuit. The auction order information represents an article exhibited in an auction, where the price of the article is reduced until someone declares his or her intention to purchase the article. Furthermore, the price of the article is raised if the number of available copies of the article is smaller than the number of clients who want to purchase them, thus reducing the number of clients who want to purchase the articles.

Unlike an auction where the price of an article is raised stepwise, such an auction where the price of an article is reduced stepwise makes it possible to reliably prevent the price from rising unduly, and makes it easier to determine a winner from bidders. According to the method where the price of the article is raised when a plurality of bidders compete with one another, as disclosed in the aforementioned publication, the process of determining a winner becomes complicated. Moreover, users participating in the auction are required to set the highest allowable price at the time of competition in advance. This causes a problem that makes the operation troublesome and complex.

### SUMMARY OF THE INVENTION

The claimed invention has been made in consideration of the aforementioned problem.

It is an object of the claimed invention to provide a system, method and apparatus capable of more easily and reliably holding an auction of an article.

In order to achieve the above-stated object, the invention provides a method for holding an auction of an article using a server-client system connected through a communication network, comprising the steps of reducing stepwise the price of the article displayed by client computers if no bid has been sent from the client computers, and causing a server computer to determine a winner at a bidding price if bids have been received from the client computers at the price.

By employing a system to accept bids where the price of an article exhibited in an auction is reduced stepwise, the price is prevented from being raised unduly, i.e., as in a system where the price of an article is raised, and users can make bids at a suitable price. Therefore, a bidder stands a good chance of a knock-down. If a plurality of users have made bids at a certain price, one of them is determined to be a winner at the bidding price instead of raising the price of the article. As a result, users find the auction convenient.

In determining a winner from a plurality of bidders, the winner is determined, for example, either as a first bidder or by lottery.

It is preferable that the price of the article decrease stepwise between a preset initial price and a preset lowest price at intervals of a predetermined period, and by a predetermined markdown. By setting the lowest price, it becomes possible to prevent a knock-down at an unduly low price. The period may be constant or changed in accordance with a decrease in the price. The period may also vary according to an article to be exhibited. By adjusting the period, it also becomes possible to adjust the period for a knock-down.

If a winner has been determined, the client computer of the winner may display information on the confirmation of a knock-down. Subsequently, the winner is advised that he or she has succeeded in the auction. It is preferable that the information on the confirmation of a knock-down include information on the settlement of the winner.

If a winner has been determined, the client computers may display information on the interruption of bidding. Thus, it is possible to advise the users that one of them has already become a winner, or that the knock-down process is under way, and prevent any more bids from wastefully being made.

In the case where the information on the confirmation of a knock-down is displayed, if no response to the information on the confirmation of the knock-down has been sent from the client computer of the winner, within a predetermined period, it is preferable that the server computer cancel the determination of the winner and that the auction be reopened. That is, the price of the article, which again decreases stepwise from the bidding price, is displayed by the client computers, so that bids will be accepted again. If a winner has been determined from a plurality of bidders, another winner may be determined again from bidders other than the first-determined winner.

If a response to the information on the confirmation of a knock-down has been sent from the client computer of the winner within a predetermined period, it is also possible to stop the auction of the article.

It is also possible to make a bid with a desired bidding price that is set in advance. This eliminates the necessity of waiting for the price of the article to decrease to a price with which a user is content, and makes the auction more convenient. If the price has reached the preset price, the server computer performs processings on the assumption that a bid has been made.

The invention also provides a system for holding an auction of an article using a client-server system connected through a communication network. This system has client computers displaying a price of the article and sending a bid, and a server computer reducing stepwise the price of the article displayed by the client computers if no bid has been received from the client computers. The server computer also accepts bids from the client computers with the reduced price of the article defined as a bidding price, and determines a winner at the bidding price.

The invention also provides an apparatus for holding an auction through a communication network. This apparatus comprises a first device that stores an initial price and a lowest price of the article, a second device that sends auction information, including a price of the article to the communication network, and a third device that receives bids through the communication network with the price of the article that has been sent and defined as a bidding price. The second device sends the price of the article that is reduced from the initial price to the lowest price every time it is reduced stepwise, as long as the third device does not receive the bids. Furthermore, the third device determines a winner with the price of the article that has been reduced by the second device defined as the bidding price. This apparatus may function as a server computer.

The computers employed in the invention include arbitrary equipment having the functions of processing, inputting and outputting data, and the function of communicating, and are not limited by their physical configurations.

### BRIEF DESCRIPTION OF THE DRAWINGS

Fig. 1 is a conceptual view of a system according to an embodiment of the invention.
Fig. 2 is a block diagram showing the structure of a server computer shown in Fig. 1.
Fig. 3 is a block diagram showing the structure of client computers shown in Fig. 1.
Fig. 4 is a flowchart of a process according to the embodiment of the invention.
Fig. 5 is a detailed flowchart of a knock-down process shown in Fig. 4.
Fig. 6 is an explanatory view of a screen displaying information on an auction.
Fig. 7 is an explanatory view of a screen displaying information on the confirmation of a knock-down.
Fig. 8 is an explanatory view of a screen displaying the state of an auction.

### DETAILED DESCRIPTION OF PREFERRED EMBODIMENTS

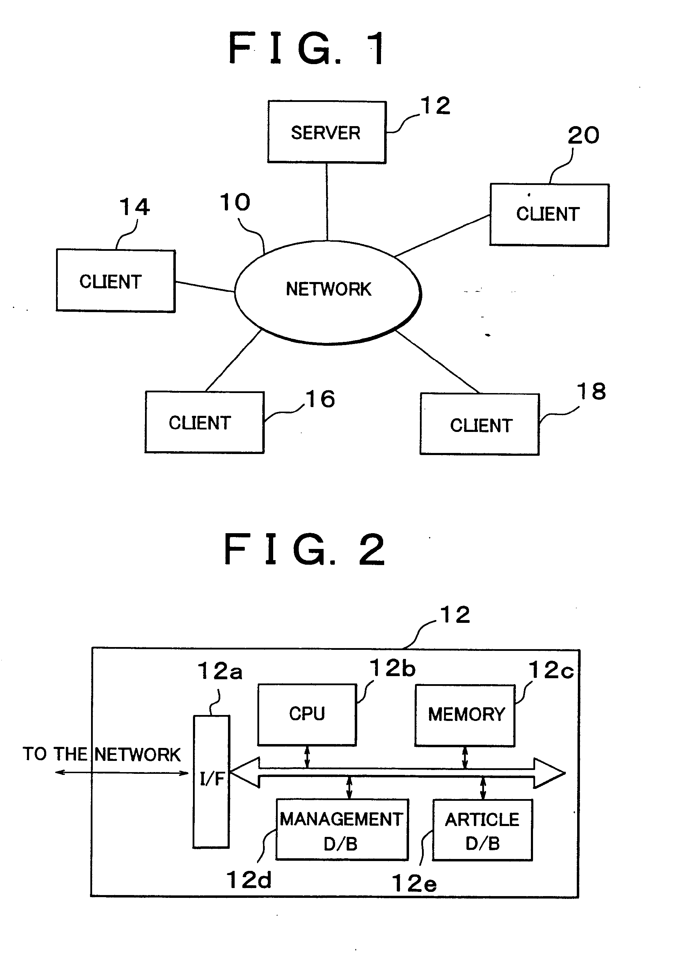

Hereinafter, an embodiment of the invention will be described with reference to Figs. 1 through 8.

Fig. 1 is a conceptual view of an auction system according to the embodiment of the invention. This is a client-server system wherein a server computer 12 and client computers 14-20 are connected through a network 10. The client computers 14-20, which are operated by users participating in an auction, have a display for displaying information on articles exhibited in an auction. The information is sent from the server computer 12. A user who wants to have an article exhibited in an auction can send data regarding the article from one of the client computers, e.g. the client computer 20, to the server computer 12 through the network 10.

The server computer 12 has a data base for managing data regarding articles to be exhibited in an auction, and a data base for managing information on users participating in the auction. The server computer 12 sends information on an auction to the client computers 14-20 of the users participating in the auction for display. Information on an auction can be sent from the server computer 12 to the client computers 14-20 in the form of a Web page written in Hyper Text Markup Language (HTML). The client computers 14-20 can display the information on the auction in the form of a Web page, using a World Wide Web (WWW) browser. It does not matter whether the network 10 is wired or wireless. For example, the Internet may be used as the network 10.

Fig. 2 is a block diagram showing the structure of the server computer 12. The server computer 12 is composed of an interface I/F 12a for connection to the network 10, a CPU 12b, a memory 12c constructed of a ROM, a RAM, a hard disk and the like, a management data base (D/B) 12d for storing information on users participating in an auction, and an article data base (D/B) 12e for storing data regarding articles to be auctioned.

The management data base 12d stores personal information on users, for example, the ID's, names, addresses, purchase records, credit card numbers, login names and the like of the users. If a user has declared his or her intention to participate in an auction through a client computer, the CPU 12b gives a user ID to the user, so that the user ID can be stored in the management data base 12d. The user ID thus given to the user is also sent to his or her client computer through a communication network. It is preferable that a user ID be given to a user as soon as the user has sent certain information on monetary dealings, such as a credit card number from his or her client computer, to the server computer 12.

The article data base 12e stores data regarding an auction of articles. More specifically, the pictures, features, initial prices, lowest prices, markdowns, and markdown periods of the articles. When a user has an article exhibited in an auction, the user can set the initial price, lowest price, markdown and the like of the article. At the outset of an auction, the CPU 12b displays the initial price of an article, together with its picture and features, and accepts bids from users. If no user has made a bid for the article, information on an auction with a price reduced by the markdown stored in the article data base 12e is sent to and displayed by the client computers 14-20 after the lapse of a predetermined markdown period (which may be set by the user and stored in the article data base 12e). Bid information from the client computers 14-20 is received by the interface 12a through the communication network 10 and supplied to the CPU 12b. If a plurality of bidders have made a bid at a certain price, one winner is determined at the price, instead of raising the price of the article. The process for determining a winner will be described later. The CPU 12b sends information on the confirmation of a knock-down to the winner in the form of a Web page, and performs the knockdown process. The CPU 12b sends a Web page announcing the interruption of biddings to the client computers of the other participants, so that the client computers display the Web page.

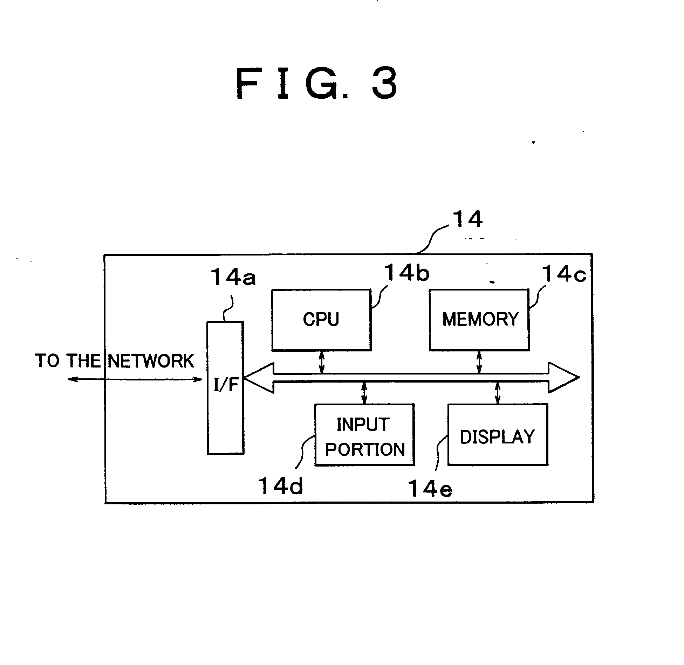

Fig. 3 is a block diagram showing the structure of a client computer 14. The other client computers 16-20 can also be constructed in the same manner. The client computer 14 is mainly composed of an interface I/F 14a for connection to the communication network 10, CPU 14b, memory 14c such as a ROM, RAM and hard disk, input portion 14d and display 14e.

The input portion 14d makes it possible to input personal information on users who want to participate in an auction, such as the ID's and credit card numbers of the users, and a bid of the price displayed by the display 14e. The input portion 14d also makes it possible to input URL's to display auction information sent from the server computer 12. The inputted data are sent to the server computer 12 through the I/F 14a and the communication network 10. For example, the input portion 14d can be constructed of a keyboard, a mouse, a touch switch or the like.

The display 14e displays auction information sent from the server computer 12, for example, in the form of a Web page. Also, the information on the confirmation of a knock-down, which has been sent from the server computer 12, is displayed by the display 14e of the client computer of a winner. Using the information on the confirmation of the knock-down, it is possible to perform a knock-down process including settlement.

The client computer requires nothing more than the functions of inputting personal information on a user and bids, and establishing connections to a communication network and a display capable of displaying auction information sent from the server computer. The client computer may be constructed of a so-called personal computer, an information terminal such as a PDA (Personal Digital Assistant), or a mobile phone.

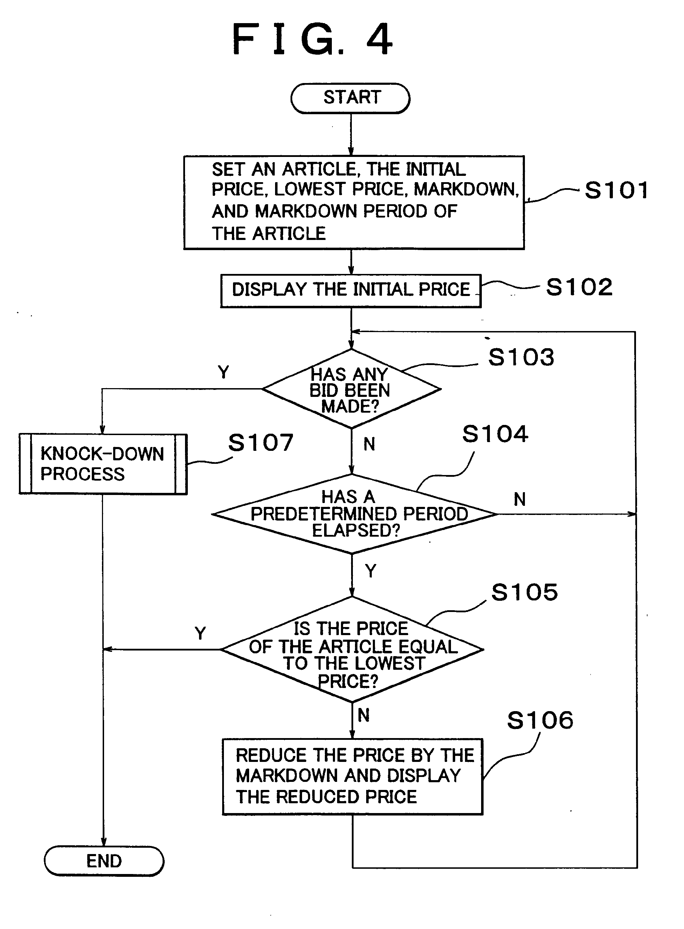

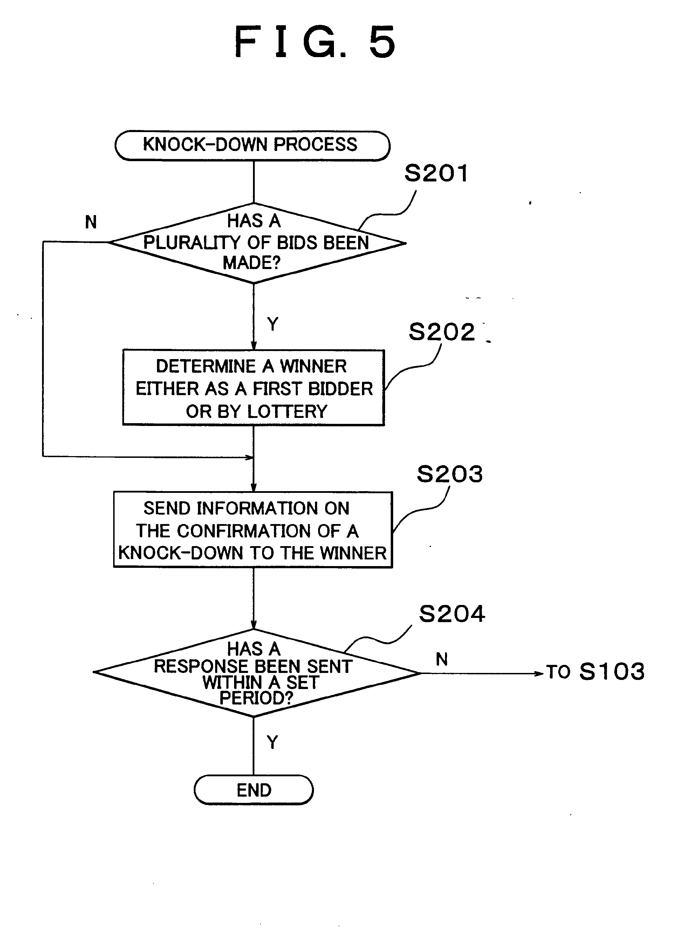

Figs. 4 and 5 show detailed processes of auction methods according to this embodiment. First of all, an article to be exhibited in an auction and the initial price, lowest price, markdown and markdown period of the article are set (S101). The initial price and lowest price can be set by a user who has the article exhibited in the auction, and stored in the server computer 12. The markdown and markdown period of the article may be set either by the user or on the side of the server computer 12 automatically. It is also preferable to change the markdown and markdown period of the article according to its features. The markdown and markdown period of the article need not be constant and may be changed. For example, the markdown can be set small at the outset and then increased. Conversely, the markdown can be set great at the outset and then reduced. It is also preferable to reduce the price every two hours at an early stage, and then gradually shorten (or lengthen) the markdown period. It is also preferable to determine the markdown and markdown period of the article according to the record concerning the articles exhibited in the past.

After an article and the initial price, lowest price, markdown and markdown period of the article have been set, the server computer 12 inserts the article and its initial price into a Web page, and sends them to the client computers 14-20 as auction information, which is then displayed by the displays of the client computers 14-20 (S102). As described already, it is desirable to send auction information exclusively to the client computers of users who have sent information on monetary dealings, such as their own credit card numbers, to the server computer 12 and qualify them as participants in the auction.

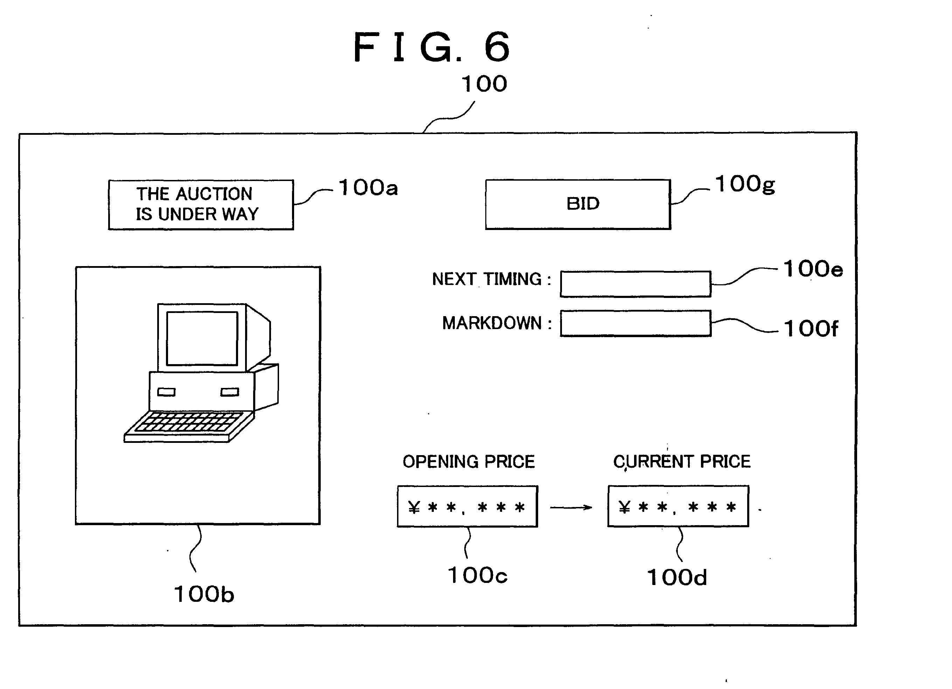

Fig. 6 shows an example of an auction information screen 100 displayed by the displays of the client computers 14-20. The screen 100 has a window 100a indicating the state of an auction. The window 100a indicates whether the auction is under way to accept bids, the auction has been interrupted, or the auction has been completed with a knock-down. Fig. 6 shows that the auction is under way to accept bids. The screen 100 has a window 100b showing the picture of an article. Users can check the article exhibited in the auction by looking at the window 100b. The window 100b can display the features of the article along with its picture. The screen 100 has a window 100c showing the initial price i.e., opening price, set for the article and a window 100d showing the current price of the article. Because the price of the article decreases stepwise as long as no bid has been made, the price shown in the window 100d decreases stepwise. By looking at the window 100d, the users judge whether to make a bid. The screen 100 also has a window 100e showing the next markdown timing and a window 100f showing the markdown. Naturally it is also possible to refrain from displaying these information. As the next markdown timing and the markdown are displayed, the users can determine the timing for making a bid.

If a user wants to buy an article after looking at the window 100d showing the current price of the article, he or she operates a bidding button 100g shown in the screen 100. In response to the operation of the bidding button 100g, the CPU of one of the client computers 14-20 sends a bid to the server computer 12 through the communication network 10.

Referring again to Fig. 4, after the initial price has been displayed, the server computer 12 judges whether or not a bid has been made from any of the client computers 14-20 (S 103). If no bid has been made, the server computer 12 then judges whether or not a predetermined period, e.g. two hours, has elapsed (S104). This period is the markdown period set in S101. If the predetermined period has not elapsed, the server computer 12 continues to check whether or not any bid has been made. If the predetermined period has elapsed before the server computer 12 accepts any bid, the server computer 12 judges whether or not the current price is equal to the lowest price set in S101 (S105). If the current price is equal to the lowest price, it cannot be reduced any further. Therefore the auction is terminated. On the other hand, if the current price is not equal to the lowest price, the server computer 12 reduces it by the markdown set in S101 after the lapse of the predetermined period, so that the client computers 14-20 display the reduced price (S106). Then the server computer 12 checks again whether or not any bid has been made from the client computers 14-20.

If a bid has been made from one of the client computers 14-20, or if a plurality of users have made bids (YES in S103), then the server computer 12 proceeds to predetermined knock-down process (S107). In the knock-down process, one of the bidders is selected as a winner at the price at a time when bids are made, namely, at the bidding price. The winner is then urged to perform the knock-down process.

Fig. 5 is a detailed flowchart of the knock-down process shown in Fig. 4. First of all, the server computer 12 judges whether or not a plurality of bids have been made (S201). This judgment may be made based on the number of bids that have been made within a predetermined period after the display of a new price, or based on the number of bids that have been made within a period which can be regarded as a period almost equal to the timing of the first bidding, e.g., 10 seconds.

If there is only one user who has made a bid, the user is determined as a winner. On the other hand, if a plurality of users have made a bid, one of them is determined as a winner at the bidding price. The winner can be determined according to two methods. That is, a winner is determined either as the first bidder or by lottery. It is also preferable to select one of the methods according to the number of bidders, e.g., a winner is determined as the first bidder when the number of bidders is relatively small, and by lottery when the number of bidders is relatively great. Lotteries can be drawn according to a suitable method. It is preferable, however, to send to the bidders an information indicating that a winner will be determined by lottery, inquire whether or not they want to participate, urge them to send their responses to the inquiry using the client computers, and perform the process of drawing lotteries. The information on their intentions to draw lotteries may further include an information on the selection of methods of drawing lotteries. In this case, lotteries can be drawn according to the method desired by the vast majority of bidders. After the lotteries have been drawn, the winner is determined as a winner and advised that he or she has won, and the other bidders who have lost are also advised.

After one of the bidders has been determined as a winner, the server computer 12 sends information on the confirmation of a knock-down to the client computer of the winner, so that the information is displayed by the client computer (S203).

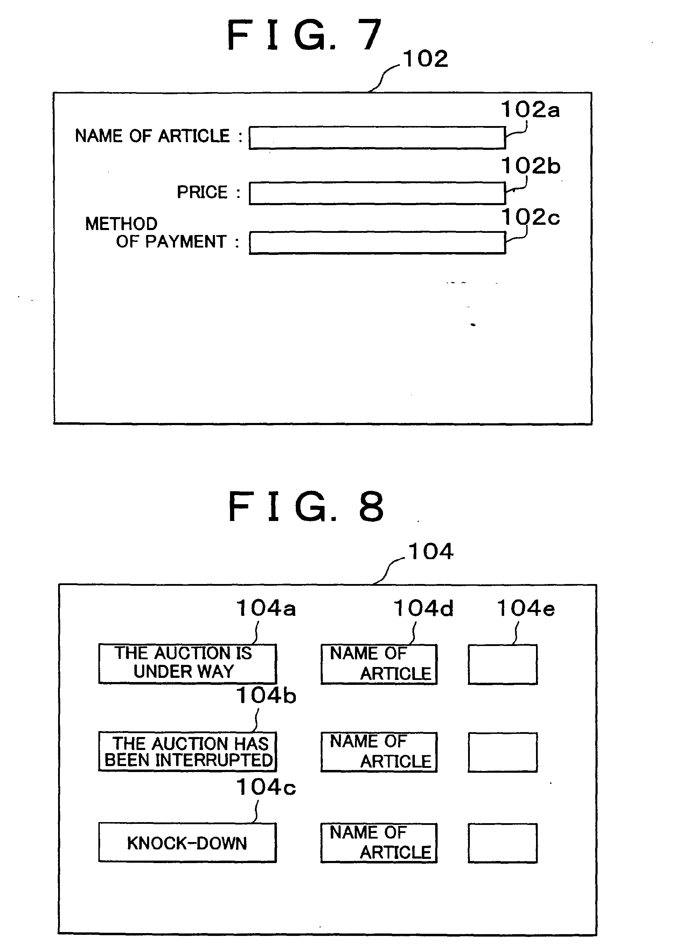

Fig. 7 shows an example of a screen 102 which is displayed by the client computer of a winner to show an information on the confirmation of a knock-down. The screen 102 has a window 102a showing the name of an article, a window 102b showing a bidding price, and a window 102c for confirming a method of settlement. The user finally confirms a knock-down by looking at the screen 102 and sends a confirmation message to the server computer 12. In an auction wherein the prices of articles for exhibition increase stepwise, after a knock-down, a winner may reconsider his or her bidding price and cancel the knock-down. However, in an auction wherein the prices of articles for exhibition decrease as in this embodiment, since users make bids at prices with which they are perfectly content, the possibility of a knock-down is high. Thus, the screen 102 for confirmation of a knock-down can be designed relatively simply.

In the case where an information on the confirmation of a knock-down is sent to, and displayed, by the client computer of a winner, it is preferable to indicate that the knock-down process is under way and that no bids will be accepted. For example, the window 100a of the screen 100 is switched from "the auction is under way" to "the auction has been interrupted," or "the knock-down process is under way," so that any new bid from any user will be rejected.

Referring to Fig. 5, after displaying a screen for the confirmation of a knock-down, the server computer 12 judges whether or not a response to information on the confirmation of a knock-down has been sent from the client computer of a winner (S204). If a response has been sent to the server computer 12 within a predetermined period, the auction is completed with the result of a knock-down. If there is no response within a predetermined period, or if the winner has canceled the knock-down, the operation proceeds to S103 shown in Fig. 4 to reopen the auction. Namely, the bidding price is displayed again and bids will be accepted from this price. In this case, the window 100a of the screen 100 shown in Fig. 6 is switched again from "the auction has been interrupted" to "the auction is under way," so that bids from the users will be accepted. Naturally, in the case where a plurality of bids have been made, if the first bidder or the winner of the lottery qualifying as a winner has canceled a knock-down, the second bidder, or a user who has won the lottery in the second round, may be determined as a winner and receive information on the confirmation of the knock-down.

Thus, according to this embodiment, the auction is held in such a manner that the price of an article is reduced stepwise. Even if a plurality of bids have been made at a certain price, a winner is determined at the bidding price. This facilitates the overall process.

If auctions of a plurality of articles are held simultaneously, the server computer 12 preferably sends information on the state of the auctions of the respective articles to the client computers 14-20, which then display the information. For example, as shown in Fig. 8, it is preferable that a screen 104 have windows 104a-104c showing the state of auctions of articles for exhibition, windows 104d showing the names of the articles, and windows 104e for explaining the features of the articles, so that users find it easy to grasp the articles exhibited for the auctions. Fig. 8 shows three articles marked with "the auction is under way," "the auction has been interrupted" and "knock-down" respectively. If the name of the article marked with "the auction is under way" is operated i.e., clicked with a mouse, the server computer 12 preferably sends the auction information screen 100 shown in Fig. 6 to the client computers for display.

In this embodiment, a user makes a bid by sending a request to the server computer 12 after looking at the current price displayed by a display. The user may set a bidding price in advance, and send to the server computer 12 a message that he or she wants to make a bid as soon as the price is reached. Such a request is stored in the management data base 12d of the server computer 12. Every time the price is reduced, it is judged whether or not the price meets the requirement of the user. The process of judging whether or not any bid has been made (S103) as shown in Fig. 4 may be performed in this manner.

In the illustrated embodiment, the controllers are implemented with general purpose processors. It will be appreciated by those skilled in the art that the controllers can be implemented using a single special purpose integrated circuit (e.g., ASIC) having a main or central processor section for overall, system-level control, and separate sections dedicated to performing various different specific computations, functions and other processes under control of the central processor section. The controllers can be a plurality of separate dedicated or programmable integrated or other electronic circuits or devices (e.g., hardwired electronic or logic circuits such as discrete element circuits, or programmable logic devices such as PLDs, PLAs, PALs or the like). The controllers can be suitably programmed for use with a general purpose computer, e.g., a microprocessor, microcontroller or other processor device (CPU or MPU), either alone or in conjunction with one or more peripheral (e.g., integrated circuit) data and signal processing devices. In general, any device or assembly of devices on which a finite state machine capable of implementing the procedures described herein can be used as the controllers. A distributed processing architecture can be used for maximum data/signal processing capability and speed.

While the invention has been described with reference to preferred embodiments thereof, it is to be understood that the invention is not limited to the preferred embodiments or constructions. To the contrary, the invention is intended to cover various modifications and equivalent arrangements. In addition, while the various elements of the preferred embodiments are shown in various combinations and configurations, which are exemplary, other combinations and configurations, including more, less or only a single element, are also within the spirit and scope of the invention.

In client-server systems interconnected through a network (10), a server computer (12) accepts bids from respective client computers (14 to 20) while reducing the price of an article stepwise. If a plurality of bids have been made at a certain price, one of the bidders is determined as a winner at the price. The server computer (12) sends information on the confirmation of a knock-down to the winner. The auction is closed upon completion of the knock-down process. The auction is easily and reliably held by using the network.

## Claims

1. A method for holding an auction of an article using a client-server system (12) connected through a communication network (10), **characterized by** comprising:
a step (S102) of causing at least one client computer (14, 16, 18, 20) to display a price of the article;
a step (S103, S104, S105, S106) of reducing stepwise the price of the article displayed by the client computer (14, 16, 18, 20) if no bid has been received from the client computer (14, 16, 18, 20), with the displayed price of the article defined as a first bidding price; and
a step (S107) of causing a server computer (12) to determine a winner at a second bidding price if any bid has been received from the client computer (14, 16, 18, 20), when the price of the article that has been reduced and displayed by the client computer (14, 16, 18, 20) is defined as the second bidding price.

2. The method according to claim 1, **characterized in that**:
the price of the article decreases stepwise between a predetermined initial price and a predetermined lowest price.

3. The method according to claim 1, **characterized in that**:
the price of the article decreases stepwise at intervals of a predetermined period.

4. The method according to claim 1, **characterized in that**:
the price of the article decreases stepwise by a predetermined markdown.

5. The method according to claim 1, **characterized in that**:
a first bidder is determined as the winner if a plurality of bids have been made.

6. The method according to claim 1, **characterized in that**:
the winner is determined by lottery if a plurality of bids have been made.

7. The method according to claim 1, **characterized in that**:
the client computer (14, 16, 18, 20) of the winner displays information on the confirmation of a knock-down.

8. The method according to claim 1, **characterized in that**:
the client computer (14, 16, 18, 20) displays information on the interruption of bidding if the winner has been determined.

9. The method according to claim 1, **characterized in that**:
the server computer (12) cancels the determination of the winner unless a response to information on the confirmation of a knock-down has been sent from the client computer (14, 16, 18, 20) of the winner within a predetermined period.

10. The method according to claim 9, **characterized in that**:
another winner is determined from bidders other than the first-determined winner after cancellation of the determination of the first-determined winner by the server computer (12) if a plurality of bids have been made.

11. The method according to claim 9, **characterized in that**
after cancellation of the determination of the first-determined winner by the server computer (12), the price of the article, which again decreases stepwise from the price at the time of the bid, is displayed by the client computer (14, 16, 18, 20) so as to accept bids.

12. The method according to claim 1, **characterized in that**:
the auction of the article is interrupted if a response to information on the confirmation of a knock-down has been sent from the client computer (14, 16, 18, 20) of the winner within a predetermined period.

13. The method according to claim 1, **characterized in that**:
the bid includes a preset desired bidding price.

14. A system for holding an auction of an article using a client-server system (12) connected through a communication network (10), **characterized by** comprising:
at least one client computer (14, 16, 18, 20) that displays a price of the article and sends a bid; and
a server computer (12) that reduces stepwise the price of the article displayed by the client computer (14, 16, 18,20) if no bid has been received from the client computer (14, 16, 18, 20), accepting a bid from the client computer (14, 16, 18, 20) with the reduced price of the article defined as a bidding price, and determining a winner at the bidding price.

15. An apparatus for holding an auction of an article through a communication network (10), **characterized by** comprising:
a memory (12c) that stores an initial price and a lowest price of the article; and
a control means (12d) for sending auction information, including a price of the article, to the communication network (10), and receiving bids through the communication network (10), with the price of the article that has been sent defined as a bidding price,
in that the control means sends the price of the article that is reduced from the initial price to the lowest price every time it is reduced stepwise, as long as the controller has not received the bids, and determines a winner with the price of the article that has been reduced defined as the bidding price.

16. The apparatus according to claim 15, **characterized in that**:
the control means (12b) reduces stepwise the price of the article from the initial price to the lowest price by a predetermined markdown and at a predetermined markdown timing.
